# EUROPEAN PATENT SPECIFICATION

(11) **EP 2 386 009 B1**
(45) Date of publication and mention of the grant of the patent: **22.06.2016**
(21) Application number: 09778475.5
(22) Date of filing: 11.09.2009
(51) Int. Cl.: E04H 1/04, A01G 9/14

(54) **HOUSING STRUCTURE**
BEHAUSUNGSSTRUKTUR
STRUCTURE DE LOGEMENT

(30) Priority: 12.09.2008 IT MI20081638
(43) Date of publication of application: 16.11.2011
(73) Proprietor: Costa, Florencia Julia, 53024 Montalcino (IT); Beltrami Gadola, Luca, 20144 Milano (IT)
(72) Inventor: BELTRAMI GADOLA, Luca, 20144 Milano (IT); VIGANO, Bruno, deceased (IT)
(74) Representative: Di Gennaro, Sergio
(86) International application number: PCT/EP2009/006596
(87) International publication number: WO 2010/028838

(56) References cited:
- WO-A-99/10614

## Description

The present invention refers to a housing structure consisting of at least one residential building, at least one greenhouse structure and sections able to connect a residential building to a multi-storey greenhouse structure.

The progressive urbanization of rural areas, due to the continual expansion of built-up areas, has caused a steadily growing reduction in the green areas available to residents and the gradual disappearance of the belt of allotments, meadows and orchards that formed an area of transition and compenetration between the rural and urban environments.

Even when they have survived, allotments, meadows and orchards are now increasingly far away from their possible users, in fact becoming increasingly difficult to use.

This has caused (and is causing) in the inhabitants of urban areas a growing desire to have available green areas, albeit small ones like the grassed areas normally attached to each detached house in the estates of detached houses that are being created on the outskirts of built-up areas.

The size of the grassed area normally attached to a detached house and of any communal green areas available to the residents of a housing estate is in any case limited, also because of the high price of land.

Moreover: the expansion of built-up areas leads to the emission into the atmosphere of increasingly large amounts of solid and gaseous pollutants (such as, for example, carbon dioxide), which are certainly dangerous for the environment and for the residents and which the few green areas still surviving are unable to reduce or indeed eliminate.

Object of the present invention is to eliminate the drawbacks of known housing structures, by providing a housing structure able to satisfy the residents' need for greenery since it comprises readily accessible areas designated (or that can be designated) for the cultivation of flowers, plants and/or vegetables; such a housing structure can be of ecological value and also has aesthetic merits.

This object is achieved in accordance with the invention with a housing structure having the characteristics set forth in appended independent claim 1.

Document WO99/10614 discloses a housing structure with the features of the preamble of claim 1.

Advantageous embodiments of the invention are apparent from the dependent claims. A housing structure realised according to the invention consists of at least one residential building comprising a plurality of storeys, at least one greenhouse structure subdivided into a plurality of rooms on top of each other, and sections adapted to connect a residential building to a greenhouse structure.

A connecting section includes a plurality of walkways each of which preferably connects the trampling surface of one of the storeys of the residential building to the trampling surface of one of the rooms of the greenhouse structure.

The greenhouse structure preferably has the shape of a rotational solid (for example a hyperboloid or the like) having as its axis a hollow column in which pass the relevant ducts for the utilities (water, electrical power, heating, air conditioning, etc) to be distributed to the individual rooms and it consists of a reticular structure, preferably metal, covered with plugging means which are transparent to sunlight.

A solar panel able to generate at least part of the electrical power necessary to deliver the utilities to be distributed to the individual rooms of said structure is advantageously housed on the upper part of the greenhouse structure.

The advantages presented by a housing structure according to the invention appear obvious compared with housing structures currently realized and/or being realized which do not include green and/or cultivable areas comparable with those offered by the greenhouse structure(s), which are equally easily and immediately accessible.

Further characteristics of the invention will be made clearer by the detailed description that follows, referring to purely exemplifying and therefore non limiting embodiments thereof, illustrated in the appended drawings, wherein:
- Figure 1 shows diagrammatically a side view of a housing structure according to the invention;
- Figure 2 shows diagrammatically the housing structure of Figure 1 sectioned along the plane A-A of Figure 1;
- Figure 3 shows diagrammatically a perspective side view of the housing structure of Figure 1;
- Figure 4 shows diagrammatically a vertical section of a further embodiment of the connecting section belonging to the housing structure of Figure 1;
- Figure 5 shows diagrammatically an enlarged perspective view of a portion of a corridor belonging to the connecting section of Figure 4;
- Figure 6 shows diagrammatically a greenhouse structure belonging to the housing structure of Figure 1, sectioned along a plane passing through its central hollow column.

In the appended figures like elements will be identified by the same reference numerals.

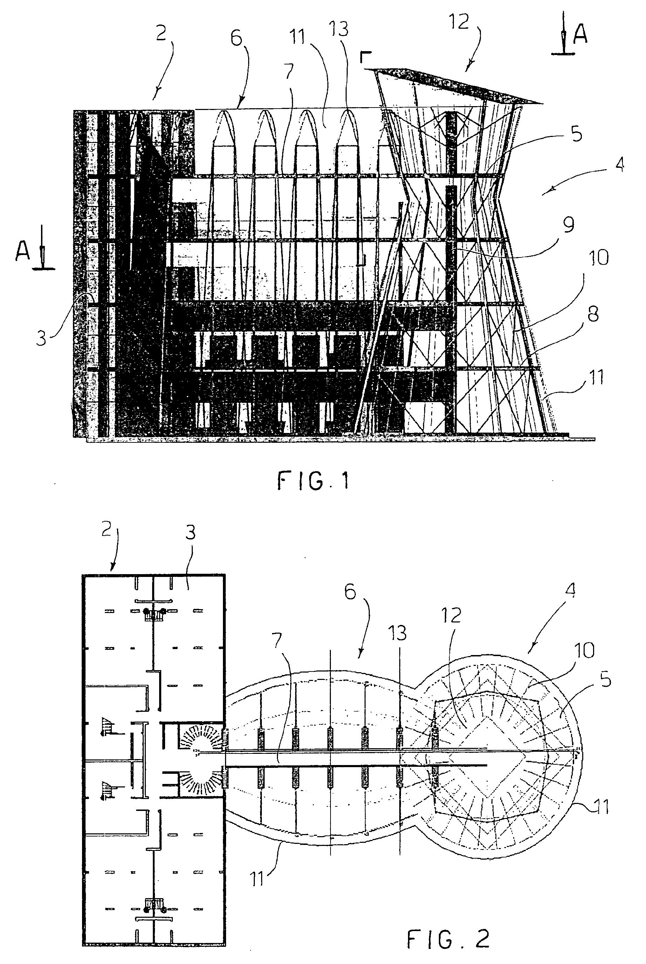

Figure 1 shows diagrammatically a side view of a housing structure 1 realised according to the invention, consisting of a residential building 2 comprising a plurality of storeys 3, a greenhouse structure 4 subdivided into a plurality of rooms 5 on top of each other and a section 6 connecting the residential building 2 to the greenhouse structure 4, making it easily and immediately accessible.

In the embodiment described herein the housing structure 1 comprises a residential building 2 connected by a section 6 to a greenhouse structure 4, but, without departing from the scope of the invention, the housing structure 1 may comprise two or more residential buildings 2, two or more greenhouse structures 4 and two or more sections 6 connecting a residential building 2 to a greenhouse structure 4.

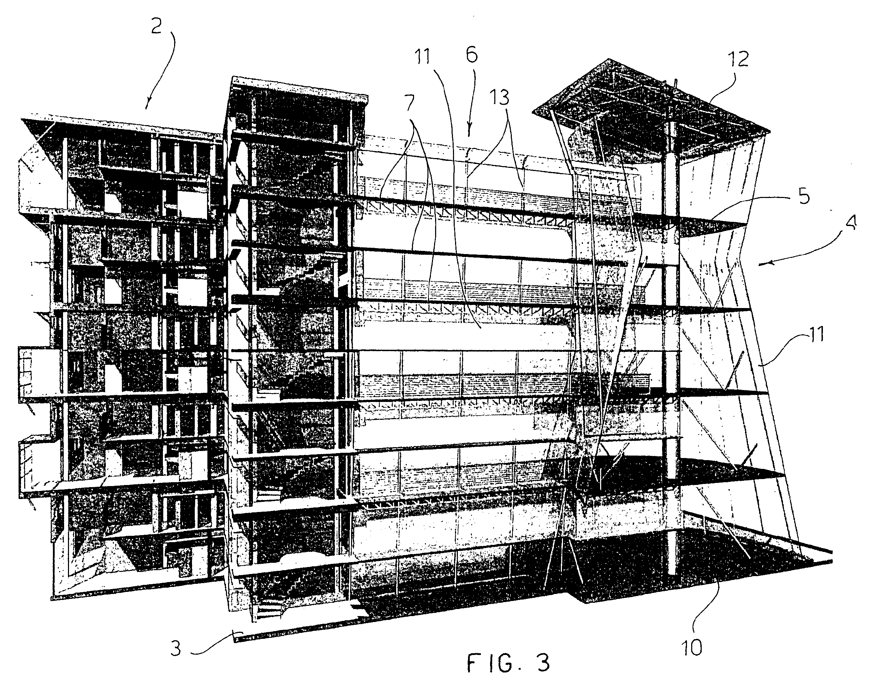

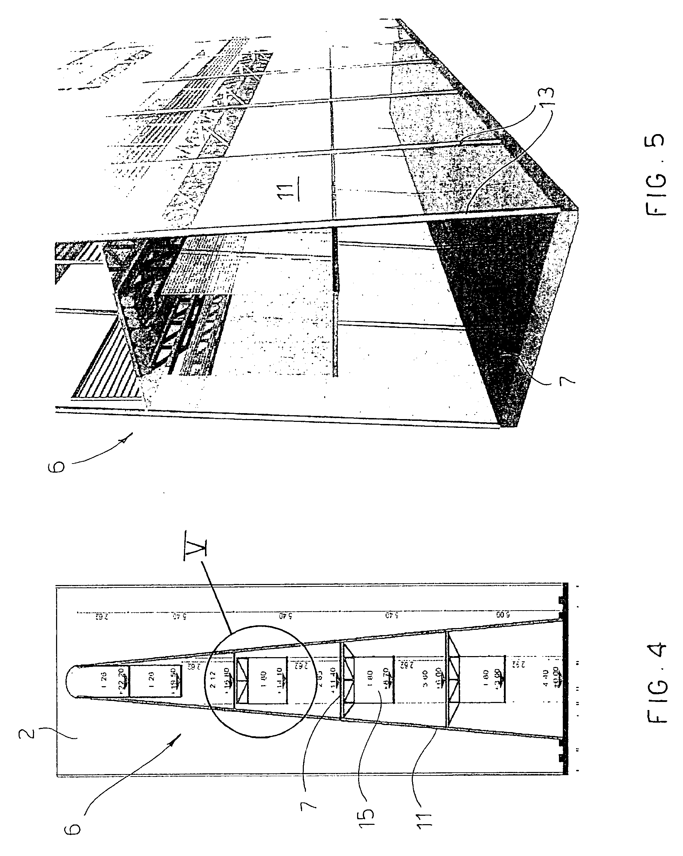

A connecting section 6 includes a plurality of walkways 7 (illustrated better in Figures 3 and 5) each of which, preferably, connects the trampling surface of one of the storeys 3 of the residential building 2 to the trampling surface 8 of one of the rooms 5 of the greenhouse structure 4.

In the preferred embodiment illustrated in the appended figures, the connecting section 6 comprises a plurality of vertical, arch-shaped supporting structures 13 connected to each other by walkways 7 and covered with plugging means 11 which are transparent to sunlight but, without departing from the scope of the invention, the structure of the connecting section 6 can be that considered most advantageous on a case-by-case basis to meet specific needs.

The plugging means 11 preferably consist of membranes of transparent plastic material, per se known, the mechanical and optical properties and the performance of which have acquired a high reliability for its duration and behavioural stability under stress due to every possible aggressive agent.

The greenhouse structure 4 has the shape of a rotational solid (an hourglass in the embodiment described herein) having as its axis a hollow column 9 in which pass the ducts for the utilities (water, electrical power, etc) to be distributed to the individual rooms 5 of the greenhouse structure 4 but, without departing from the scope of the invention, the greenhouse structure 4 can have a different shape (for example, square), which would however be less advantageous if it did not allow uniform exposure to sunlight of the areas 5 situated inside the greenhouse structure 4.

In order to maximise exposure of these areas 5 to sunlight, the greenhouse structure 4 advantageously consists of a reticular structure 10, preferably made up of metal, covered by plugging means 11 transparent to sunlight: in fact, a reticular structure is less bulky, though having the mechanical strength necessary to withstand the stresses (due to weight, wind, etc) to which the greenhouse structure 4 is subjected.

At least one solar panel 12 able to generate at least part of the electrical power absorbed by the housing structure 1, in particular to deliver the utilities to be distributed to the individual rooms 5, is advantageously housed on the upper part of the greenhouse structure 4.

According to an embodiment not explicitly indicated in the appended figures, around the truncated conical lower area of the greenhouse structure 4 is positioned screen, mobile around the greenhouse structure 4, which follows the movement of the sun from dawn to dusk to form a shadow cone which screens the rooms 5 situated in the lower conical area of the greenhouse structure 4 from potentially harmful direct sunlight.

This further screen advantageously supports a further solar panel which produces at least the electricity necessary to make it rotate around the greenhouse structure 4.

Lastly, as can be seen in figures 1 and 3, the combination of substantially prismatic sections (the residential buildings 2) and substantially cylindrical sections (the greenhouse structures 4) connected by substantially elongated sections (the connecting sections 6) gives the housing structure 1 undoubted aesthetic merit.

Figure 2 shows diagrammatically the housing structure 1 of figure 1 sectioned along the plane A-A of Figure 1: in Figure 2 the residential building 2, the greenhouse structure 4 and the section 6 connecting the residential building 2 to the greenhouse structure 4 can be seen schematically.

Also visible in Figure 2 are a walkway 7 connecting the trampling surface of one of the storeys 3 of the residential building 2 to the corresponding trampling surface 8 of one of the rooms 5 of the greenhouse structure 4, the supporting structures 13 (vertical, arch-shaped and connected to each other by the walkways 7) of the connecting body 6, the reticular structure 10 of the greenhouse structure 4, the solar panel 12 situated on the upper part of the greenhouse structure 4 and the plugging means 11, transparent to sunlight, which cover the reticular structure 10 of the greenhouse structure 4 and the connecting body 6.

In the embodiment illustrated in Figure 2, the connecting section 6 has a convex section because the walkways 7 are flanked by further level surfaces able to support additional cultivated areas and/or flower boxes or to be equipped as common living areas but, without departing from the scope of the invention, these further level surfaces may be absent, as shown in the vertical section of Figure 4.

Figure 3 shows diagrammatically a perspective side view of the housing structure 1 of Figure 1, which comprises the residential building 2 (with the outside walls removed to show the storeys 3), the greenhouse structure 4 (consisting of the reticular structure 10 covered by plugging means 11, having a plurality of rooms 5 and supporting the solar panel 12) and the connecting section 6, consisting of supporting structures 13 covered by plugging means 11, which has a plurality of walkways 7.

Figure 4 shows diagrammatically a vertical section of a further embodiment of the connecting body 6, which differs from that shown in Figure 2 essentially in that the walkways 7 are not flanked by the additional level surfaces shown in Figure 2.

From Figure 4 it can be seen that, on the ceiling of each corridor having as its floor a walkway 7, a room 15 is preferably present (designated by "V" in Figure 4 and seen better in Figure 5) as a passage in which pass the ducts for the utilities (electricity, air conditioning, possibly water, etc.) to be distributed to the lighting means and to any cultivated areas and/or flower boxes or to any common living areas present in said corridor.

Figure 5 shows diagrammatically an enlarged perspective view of the portion of corridor, belonging to the connecting section 6, which has been highlighted in Figure 4; the walkway 7, the supporting structures 13 covered by the plugging means 11 and the room 15 present in the ceiling of the corridor can be seen in Figure 5.

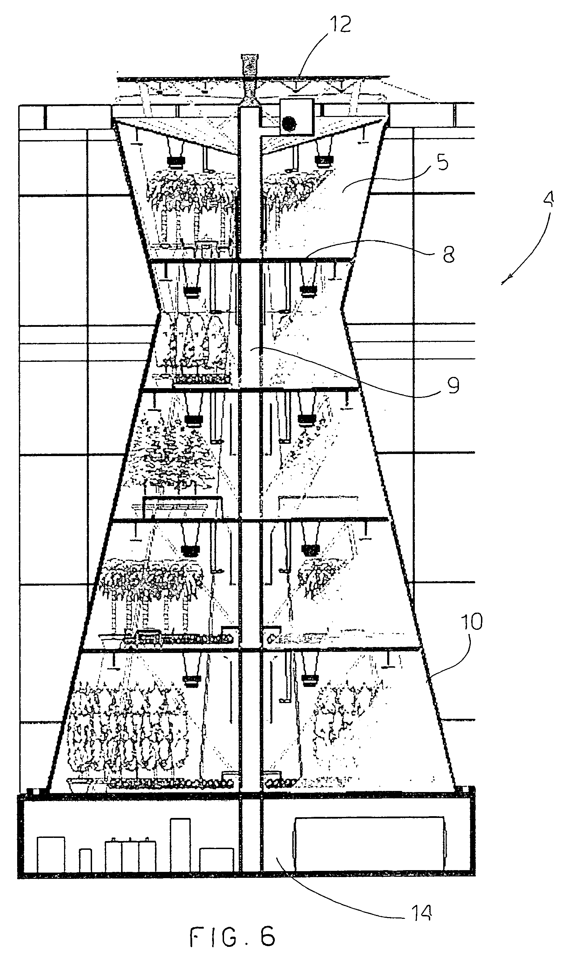

Figure 6 shows diagrammatically a greenhouse structure 4 belonging to the housing structure 1 of Figure 1, sectioned along a plane passing through its hollow central column 9 to show the rooms on top of each other 5, the reticular structure 10 covered by the plugging means 11 (not explicitly indicated in Figure 6) and the solar panel 12 situated above the greenhouse structure 4.

On the trampling surface 8 of each room 5 rest the means (pots, beds, etc.) used for the cultivation of vegetation, whilst on the ceiling of each floor there are delivery means (lighting points, water distributors/humidifiers, ventilators, air conditioners, etc.) connected to the ducts present in the hollow central column 9, required by the vegetation cultivated in each room 5.

The cultivated plants, the means and the methods used for cultivation and the delivery means will not be further described because they are per se known.

Beneath the greenhouse structure 4 there is preferably a room 14 where the equipments (boiler, air conditioning units, electrical panels, shutters etc.) are situated to generate and/or monitor the utilities (water, electricity, heating, etc.) to be distributed to the individual rooms 5 of the greenhouse structure 4 by means of the ducts passing in the hollow column 9.

Means (not described because they are per se known) are advantageously installed in the room 14 to mix the emission gas from the boiler (and, possibly, at least part of the gas from the boiler(s) belonging to the heating system(s) of the residential building 2) with the air introduced into the rooms 5 to enrich it with carbon dioxide, improving the growth of the cultivated plants ("carbon fertilization") and reducing the amount of polluting gas introduced into the atmosphere, with obvious advantages for the ecosystem.

Numerous variations and modifications of detail within the reach of a person skilled in the art can be made to the housing structure previously described without thereby departing from the scope of the invention as set forth in the appended claims.

## Claims

1. A housing structure (1), comprising at least one residential building (2) subdivided into a plurality of storeys (3), at least one greenhouse structure (4) subdivided into a plurality of rooms (5) on the top of each other and at least one section (6) connecting said residential building (2) to said greenhouse structure (4), **characterized in that** the greenhouse structure (4) has the shape of a rotational solid with a hollow column (9) as its axis, the ducts for the utilities to be distributed to the individual rooms (5) of the greenhouse structure (4) passing through the hollow column (9).

2. The housing structure (1) according to claim 1, **characterized in that** a connecting section (6) includes a plurality of corridors on the top of each other, each of which has as a floor a walkway (7) connecting the trampling surface of one of the storeys (3) of a residential building (2) to the trampling surface (8) of one of the rooms (5) of the greenhouse structure (4).

3. The housing structure (1) according to claim 2, **characterized in that** a connecting section (6) includes a plurality of vertical and arch-shaped supporting structures (13) connected to each other by said walkways (7) and is covered with plugging means (11) which are transparent to the sunlight.

4. The housing structure (1) according to claim 2 or 3, **characterized in that**, on the ceiling of each corridor belonging to a connecting section (6) a passage (15) is present, through which the ducts for the utilities (electricity, air conditioning, water etc.) to be distributed in said corridor pass.

5. The housing structure (1) according to anyone of claims 2-4, **characterized in that**, in each corridor belonging to a connecting section (6), the walkway (7) is flanked by additional level surfaces able to support additional cultivated areas and/or flower boxes or to provide common living areas.

6. The housing structure (1) as according to anyone of the previous claims, **characterized in that** the at least one greenhouse structure (4) is composed of a reticular structure (10) covered by plugging means (11) which are transparent to the sunlight.

7. The housing structure (1) according to anyone of the previous claims, **characterized by** also comprising at least one solar panel (12) housed on the upper part of the at least one greenhouse structure (4) and able to generate at least part of the electricity absorbed by the housing structure (1), in particular for providing the utilities to be distributed to the individual rooms (5) of said greenhouse structure (4).

8. The housing structure (1) according to anyone of the previous claims, **characterized in that** each greenhouse structure (4) also comprises a screen, which is mobile around at least part of said greenhouse structure (4) to generate a shadow cone able to screen from the direct sunlight the rooms (5) of said greenhouse structure (4) situated behind said screen.

9. The housing structure (1) according to claim 8, **characterized in that** said screen supports a solar panel able to produce at least the electricity necessary to make it rotate around the greenhouse structure (4).

10. The housing structure (1) according to anyone of the previous claims, **characterized in that** each greenhouse structure (4) also includes a room (14), situated under the greenhouse structure (4), where equipments are situated to generate and/or to monitor the utilities to be distributed to the individual rooms (5) of the greenhouse structure (4) by means of the ducts passing through the hollow column (9), said equipments also including means capable of enriching the air introduced into the rooms (5) with carbon dioxide by mixing it with the emission gas of the boilers belonging to the housing structure (1).

## Patentansprüche

1. Gebäudestruktur (1), welche zumindest ein in mehrere Stockwerke (3) aufgeteiltes Wohngebäude (2), zumindest eine in mehrere übereinander angeordnete Räume (5) aufgeteilte Gewächshausstruktur (4) und zumindest einen das Wohngebäude (2) mit der Gewächshausstruktur (4) verbindenden Teil (6) umfasst, **dadurch gekennzeichnet, dass** die Gewächshausstruktur (4) die Form eines Rotationskörpers mit einer hohlen Säule (9) als Achse aufweist, wobei die Versorgungsleitungen für die einzelnen Räume (5) der Gewächshausstruktur (4) durch die hohle Säule (9) verlaufen.

2. Gebäudestruktur (1) nach Anspruch 1, **dadurch gekennzeichnet, dass** ein Verbindungsteil (6) mehrere Korridore übereinander aufweist, von denen jeder als Boden einen Gehweg (7) aufweist, der den Zugang eines der Stockwerke (3) eines Wohngebäudes (2) mit dem Zugang (8) eines der Räume (5) der Gewächshausstruktur (4) verbindet.

3. Gebäudestruktur (1) nach Anspruch 2, **dadurch gekennzeichnet, dass** ein Verbindungsteil (6) mehrere miteinander durch die Gehwege (7) verbundene, vertikale und bogenförmige Tragstrukturen (13) aufweist und mit Abdichtmitteln (11) bedeckt ist, die für Sonnenlicht transparent sind.

4. Gebäudestruktur (1) nach Anspruch 2 oder 3, **dadurch gekennzeichnet, dass** auf der Decke jedes zu einem Verbindungsteil (6) gehörenden Korridors ein Durchgang (15) vorhanden ist, durch den die Versorgungsleitungen (Elektrizität, klimatisierte Luft, Wasser etc.) für den Korridor verlaufen.

5. Gebäudestruktur (1) nach einem der Ansprüche 2 bis 4, **dadurch gekennzeichnet, dass** in jedem zu einem Verbindungsteil (6) gehörenden Korridor der Gehweg (7) von zusätzlichen ebenen Flächen flankiert ist, welche zusätzliche kultivierte Bereiche und/oder Blumenkästen tragen oder gemeinsame Wohnbereiche darstellen können.

6. Gebäudestruktur (1) nach einem der vorhergehenden Ansprüche, **dadurch gekennzeichnet, dass** die zumindest eine Gewächshausstruktur (4) aus einer netzartigen Struktur (10) besteht, die von Abdichtmitteln (11) bedeckt ist, welche für Sonnenlicht transparent sind.

7. Gebäudestruktur (1) nach einem der vorhergehenden Ansprüche, **dadurch gekennzeichnet, dass** sie auch zumindest einen Sonnenkollektor (12) umfasst, der auf dem Oberteil der zumindest einen Gewächshausstruktur (4) untergebracht ist und zumindest einen Teil der von der Gebäudestruktur (1) verbrauchten Elektrizität erzeugen kann, insbesondere zum Bereitstellen der Versorgung für die einzelnen Räume (5) der Gewächshausstruktur (4).

8. Gebäudestruktur (1) nach einem der vorhergehenden Ansprüche, **dadurch gekennzeichnet, dass** jede Gewächshausstruktur (4) weiterhin eine Abschirmung umfasst, welche um zumindest einen Teil der Gewächshausstruktur (4) bewegbar ist, um einen Schattenkegel zu erzeugen, der die Räume (5) der Gewächshausstruktur (4) hinter der Abschirmung gegen direktes Sonnenlicht abschirmen kann.

9. Gebäudestruktur (1) nach Anspruch 8, **dadurch gekennzeichnet, dass** die Abschirmung einen Sonnenkollektor trägt, der zumindest die Elektrizität erzeugen kann, die zu deren Drehen um die Gewächshausstruktur (4) benötigt wird.

10. Gebäudestruktur (1) nach einem der vorhergehenden Ansprüche, **dadurch gekennzeichnet, dass** jede Gewächshausstruktur (4) weiterhin einen Raum (14) aufweist, der sich unter der Gewächshausstruktur (4) befindet, wo Geräte zum Erzeugen und/oder Überwachen der Versorgung für die einzelnen Räume (5) der Gewächshausstruktur (4) mittels der durch die hohle Säule (9) verlaufenden Leitungen untergebracht sind, wobei diese Geräte ferner Mittel zum Anreichern der in die Räume (5) eingeführten Luft mit Kohlendioxid durch Mischen mit dem Abgas der zur Gebäudestruktur (1) gehörenden Kessel aufweisen.

## Revendications

1. Structure de logement (1) comprenant au moins un bâtiment résidentiel (2) sous-divisé en une pluralité d'étages (3), au moins une structure de serre (4) sous-divisée en une pluralité de pièces (5) superposées, et au moins une section (6) reliant ledit bâtiment résidentiel (2) à ladite structure de serre (4), **caractérisée en ce que** la structure de serre (4) présente la forme d'un corps rotatif avec une colonne creuse (9) en tant qu'axe, les conduits destinés aux services à distribuer aux pièces (5) individuelles de la structure de serre (4) passant à travers la colonne creuse (9).

2. Structure de logement (1) selon la revendication 1, **caractérisée en ce qu'**une section de liaison (6) comprend une pluralité de couloirs superposés, chacun d'entre eux comportant une passerelle (7) en tant que sol, laquelle relie la surface de piétinement de l'un des étages (3) d'un bâtiment résidentiel (2) à la surface de piétinement (8) de l'une des pièces (5) de la structure de serre (4).

3. Structure de logement (1) selon la revendication 2, **caractérisée en ce qu'**une section de liaison (6) comprend une pluralité de structures de support verticales arquées (13) reliées les unes aux autres par lesdites passerelles (7), tout en étant recouverte de moyens d'obturation (11) transparents à la lumière du soleil.

4. Structure de logement (1) selon la revendication 2 ou 3, **caractérisée en ce qu'**au plafond de chaque couloir appartenant à une section de liaison (6), il est prévu un passage (15) à travers lequel passent les conduits destinés aux services (électricité, climatisation, eau, etc.) à distribuer dans ledit couloir.

5. Structure de logement (1) selon l'une quelconque des revendications 2-4, **caractérisée en ce que**, dans chaque couloir appartenant à une section de liaison (6), la passerelle (7) est encadrée par des surfaces de niveaux supplémentaires, capables de supporter des zones cultivées supplémentaires et/ou des bacs à fleurs, ou de fournir des espaces de vie communs.

6. Structure de logement (1) selon l'une quelconque des revendications précédentes, **caractérisée en ce que** l'au moins une structure de serre (4) est composée d'une structure réticulaire (10) couverte par des moyens d'obturation (11) transparents à la lumière du soleil.

7. Structure de logement (1) selon l'une quelconque des revendications précédentes, **caractérisée en ce qu'**elle comprend également au moins un panneau solaire (12) installé sur la partie supérieure de l'au moins une structure de serre (4) et capable de générer au moins une partie de l'électricité absorbée par la structure de logement (1), en particulier pour l'apport des services à distribuer aux pièces individuelles (5) de ladite structure de serre (4).

8. Structure de logement (1) selon l'une quelconque des revendications précédentes, **caractérisée en ce que** chaque structure de serre (4) comprend également un écran, lequel est déplaçable autour d'au moins une partie de ladite structure de serre (4), pour générer un cône d'ombre capable de protéger les pièces (5) de ladite structure de serre (4) situées derrière ledit écran contre un ensoleillement direct.

9. Structure de logement (1) selon la revendication 8, **caractérisée en ce que** ledit écran supporte un panneau solaire capable de produire au moins l'électricité nécessaire à faire tourner celui-ci autour de la structure de serre (4).

10. Structure de logement (1) selon l'une quelconque des revendications précédentes, **caractérisée en ce que** chaque structure de serre (4) comprend également une pièce (14) située en dessous de la structure de serre (4), dans laquelle se trouvent des équipements destinés à générer et/ou à surveiller les services à distribuer aux pièces individuelles (5) de la structure de serre (4) à l'aide des conduits passant à travers la colonne creuse (9), lesdits équipements comprenant également des moyens capables d'enrichir l'air introduit dans les pièces (5) avec du dioxyde de carbone en le mélangeant avec le gaz d'échappement des chaudières appartenant à la structure de logement (1).
